# EUROPEAN PATENT APPLICATION

(11) **EP 2 012 267 A1**
(43) Date of publication of application: **07.01.2009**
(21) Application number: 07739391.6
(22) Date of filing: 23.03.2007
(51) Int. Cl.: G06Q 50/00, G06F 13/00, G06Q 30/00, H04N 7/173

(54) **CONTENT PURCHASING/VIEWING SYSTEM, CONTENT REPRODUCING DEVICE, CONTENT REPRODUCTION AUTHENTICATION SERVER**

(30) Priority: 18.04.2006 JP 2006114506
(71) Applicant: Sharp Kabushiki Kaisha, Osaka-shi, Osaka 545-8522 (JP)
(72) Inventor: HOSODA, Kotaro, Tochigi, 329-2163 (JP); SAITOH, Satoshi, Chiba, 275-0016 (JP); OIKAWA, Tatsuya, Tochigi, 329-2141 (JP)
(74) Representative: Brown, Kenneth Richard
(86) International application number: PCT/JP2007/055950
(87) International publication number: WO 2007/122962

(57) **Abstract**

A content reproducing device (10) capable of changing over from a title list where purchased contents and unpurchased contents are mixedly listed directly to the content purchase procedure and reproducing an unpurchased content as a purchased content. The content reproducing device (10) comprises a storage medium (13) storing purchased viewable contents and unpurchased nonviewable contents, a content list generating portion (11) for making a list of the contents stored in the storage medium (13), and a controlling portion (14) for allowing a displaying apparatus (30) to display the content list made. The content list shows the contents irrespective of whether each of them has been purchased or not. Through the content list, the user can be directly authenticated by a content reproduction authentication server (50) to perform the purchase procedure. After the purchase procedure is ended, the unpurchased content is changed to a purchased content, and the content can be reproduced as it is.

## Description

### TECHNICAL FIELD

The present invention relates to a content purchasing/viewing system, a content reproducing device, and a content reproduction authentication server, and more particularly, to a content purchasing/viewing system having a content reproducing device and a content reproduction authentication server connected through a network.

### BACKGROUND OF THE INVENTION

Contents such as video/audio/moving images may be acquired and reproduced with the use of various devices such as PC (Personal Computer).
Such content acquiring methods include various methods such as taking out and converting music data from CD owned by a user into digital data for using on PC, recording television programs, or purchasing digital data through a network.

A system called superdistribution enables copyright-protected contents to be distributed through various routs in an encrypted state and to be reproduced only after purchasing a license for decryption.
Distributing such contents causes mixing of free contents without copyright protection, purchased contents reproducible with a license owned, and unpurchased unreproducible contents without a license under a user's administration.

Conventional content reproducing devices generally display reproducible contents and unreproducible contents in separate title lists. Therefore, since it must first be checked which list displays contents desired to be reproduced, cumbersome operations are required. If only reproducible contents are viewed, presence of unpurchased contents may not be noticed and an opportunity to purchase may be missed.

A method has been proposed as a technology related to this problem, and if contents reproducible from the standpoint of copyright and unreproducible contents are mixed, a list is created such that the contents may be distinguished by reproducibility while mixing the both contents (see, e.g., Patent Document 1).
A content processing apparatus of Patent Document 1 includes a first source ID list showing sources that provide contents permitted to be reproduced; a content reproducing portion for reproducing contents stored in a storage medium; a reproducibility determining portion for determining whether the contents can be reproduced based on a source ID attached to the contents and the first source ID list; and a title list creating portion for creating a list of content title information so that the title information of the contents determined not to be reproducible by the reproducibility determining portion can be recognized.
Patent Document 1: Japanese Patent Application Laid-Open Publication No. 2006-59329

### DISCLOSURE OF THE INVENTION

### PROBLEM TO BE SOLVED BY THE INVENTION

However, the technology of Patent Document 1 cannot display a list that makes purchased contents and unpurchased contents distinguishable as above and does not enable purchase of unpurchased contents.

The conventional technologies only enable display of a list of recorded contents or display of a list of purchased contents.
Therefore, a list cannot be created that enables determination of whether each title is unpurchased or purchased for a medium having unpurchased contents and purchased contents mixed.
Unpurchased contents cannot be selected and turned to purchased contents through a license purchase procedure and cumbersome purchase procedures must be performed with the use of PC, for example.

The present invention was conceived in view of the above problems and it is therefore the object of the present invention to provide a content purchasing/viewing system, a content reproducing device, and a content reproduction authentication server that enable a shift to a content purchase procedure directly from a title list having purchased contents and unpurchased contents mixed such that unpurchased contents may be reproduced as purchased contents.

### MEANS FOR SOLVING THE PROBLEMS

In order to solve the above problems, a first technical means is a content purchasing/viewing system comprising a content reproducing device that stores and reproduces contents and a content reproduction authentication server that performs authentication for enabling viewing of contents stored in the content reproducing device, wherein the content reproducing device includes a storage medium having stored thereon contents including a purchased viewable content and an unpurchased unviewable content; a content list generating portion that generates a content list of the storage medium; and a controlling portion that causes a displaying device to display the content list generated by the content list generating portion, wherein the content list displays a list of contents regardless of purchase states.

A second technical means is the content purchasing/viewing system as defined in the first technical means, wherein the content reproducing device displays information indicative of whether each content displayed on the content list is purchased.

A third technical means is the content purchasing/viewing system as defined in the first technical means, wherein the content reproducing device is capable of selecting a content from the content list and exhibits different behaviors depending on whether the selected content is purchased or unpurchased when the content is selected.

A fourth technical means is the content purchasing/viewing system as defined in the third technical means, wherein when an unpurchased content is selected from the contents displayed on the content list, the content reproducing device displays on the displaying device a dialogue inquiring whether a purchase procedure is executed for the selected content.

A fifth technical means is the content purchasing/viewing system as defined in the third technical means, wherein when a purchased content is selected from the contents displayed on the content list, the content reproducing device reproduces the selected content.

A sixth technical means is a content reproducing device that stores and reproduces contents, the content reproducing device comprising a storage medium having stored thereon contents including a purchased viewable content and an unpurchased unviewable content; a content list generating portion that generates a content list of the storage medium; and a controlling portion that causes a displaying device to display the content list generated by the content list generating portion, wherein the content list displays a list of contents regardless of purchase states.

A seventh technical means is the content reproducing device as defined in the sixth technical means, wherein the content reproducing device displays information indicative of whether each content displayed on the content list is purchased.

An eighth technical means is the content reproducing device as defined in the sixth technical means, wherein the content reproducing device is capable of selecting a content from the content list and exhibits different behaviors depending on whether the selected content is purchased or unpurchased when the content is selected.

A ninth technical means is the content reproducing device as defined in the eighth technical means, wherein when an unpurchased content is selected from the contents displayed on the content list, the content reproducing device displays on the displaying device a dialogue inquiring whether a purchase procedure is executed for the selected content.

A tenth technical means is the content reproducing device as defined in the eighth technical means, wherein when a purchased content is selected from the contents displayed on the content list, the content reproducing device reproduces the selected content.

An eleventh technical means is the content reproducing device as defined in the ninth technical means, wherein when an input is made through the dialogue to indicate that a purchase procedure is executed, the content reproducing device accesses through a network to a content reproduction authentication sever that performs authentication for purchasing and making a content stored in the content reproducing device viewable and acquires detailed information of the selected content to display the detailed information as a detailed information display screen on the displaying device.

A twelfth technical means is the content reproducing device as defined in the eleventh technical means, wherein when an input is made from the detailed information display screen to indicate that the purchase procedure is continued, the content reproducing device accesses through a network to the content reproduction authentication sever and acquires authentication screen information for identifying a purchaser to display the authentication screen information as an authentication screen on the displaying device.

A thirteenth technical means is the content reproducing device as defined in the twelfth technical means, wherein the authentication screen includes an area of inputting user information and password information as authentication information and a display area enabling instruction of executing authentication and wherein the user information and the password information are input through numeric keys.

A fourteenth technical means is the content reproducing device as defined in the twelfth technical means, wherein when authentication is executed from the authentication screen, the content reproducing device accesses through a network to the content reproduction authentication sever to execute authentication and acquires a screen during authentication to display the screen during authentication on the displaying device.

A fifteenth technical means is the content reproducing device as defined in the thirteenth technical means, wherein when authentication is executed from the authentication screen, the content reproducing device transmits the user information and the password information to the content reproduction authentication sever.

A sixteenth technical means is the content reproducing device as defined in the fourteenth technical means, wherein when authentication is executed from the authentication screen and the content reproduction authentication sever fails in the authentication, the content reproducing device automatically acquires an authentication failure screen from the content reproduction authentication sever to display the authentication failure screen on the displaying device.

A seventeenth technical means is the content reproducing device as defined in the sixteenth technical means,
wherein the authentication failure screen is displayed for a certain time period and is then automatically switched to display the detailed information display screen.

An eighteenth technical means is the content reproducing device as defined in the fourteenth technical means,
wherein when authentication is executed from the authentication screen and the content reproduction authentication sever succeeds in the authentication, the content reproducing device automatically acquires a purchase confirmation screen from the content reproduction authentication sever to display the purchase confirmation screen on the displaying device.

A nineteenth technical means is the content reproducing device as defined in the eighteenth technical means, wherein when an input is made from the purchase confirmation screen to indicate that the purchase procedure is finalized, the content reproducing device accesses through a network to the content reproduction authentication sever to execute a content purchase process and acquires purchase completion screen information from the content reproduction authentication sever to display the purchase completion screen information as a purchase completion screen on the displaying device.

A twentieth technical means is the content reproducing device as defined in the eighteenth technical means, wherein when an input is made from the purchase confirmation screen to indicate that the purchase procedure is finalized, the content reproducing device accesses through a network to the content reproduction authentication sever to execute a content purchase process and records purchase information into a purchase information storage area of the storage medium.

A twenty-first technical means is the content reproducing device as defined in the nineteenth technical means,
wherein when an input is made from the purchase completion screen to indicate that the purchase completion screen is confirmed, the content reproducing device displays the content list on the displaying device.

A twenty-second technical means is the content reproducing device as defined in the twenty-first technical means, wherein the content reproducing device displays information indicative of whether each content displayed on the content list is purchased and wherein when the purchase completion screen is switched to display the content list, the information indicative of whether purchased or not is immediately reflected in the purchase result.

A twenty-third technical means is a content reproduction authentication server that performs authentication for enabling viewing of contents stored in a content reproducing device storing and reproducing the contents, wherein when the content reproducing device selects an unpurchased content from the stored contents and accesses through a network to the content reproduction authentication sever, the content reproduction authentication sever transmits detailed information of the selected content as a detailed information display screen to the content reproducing device.

A twenty-fourth technical means is the content reproduction authentication server as defined in the twenty-third technical means, wherein the detailed information display screen includes a progress information display area that displays progress information of a purchase procedure.

A twenty-fifth technical means is the content reproduction authentication server as defined in the twenty-third technical means, wherein the detailed information includes a title name, a price, a thumbnail, and a brief description of the content.

A twenty-sixth technical means is the content reproduction authentication server as defined in the twenty-third technical means, wherein the detailed information display screen includes a display area enabling selection of whether a content purchase procedure is continued or canceled.

A twenty-seventh technical means is the content reproduction authentication server as defined in the twenty-third technical means, wherein when the content reproducing device makes an input from the detailed information display screen to indicate that the purchase procedure is continued and accesses through a network to the content reproduction authentication sever, the content reproduction authentication server transmits authentication screen information for identifying a purchaser to the content reproducing device.

### EFFECT OF THE INVENTION

According to the present invention, a content purchasing/viewing system, a content reproducing device and content reproduction authentication server may be provided in which a shift to a content purchase procedure is enabled directly from a title list having purchased contents and unpurchased contents mixed such that unpurchased contents may be reproduced as purchased contents.

### BRIEF DESCRIPTION OF THE DRAWINGS

[Fig. 1] Fig. 1 is a block diagram for explaining a first embodiment of the present invention.
[Fig. 2] Fig. 2 is a view of a display example of a content list generated by a content reproducing device according to the present invention.
[Fig. 3] Fig. 3 is a flowchart for explaining an example of a purchase process of unpurchased contents related to the present invention.
[Fig. 4] Fig. 4 is a view of a display portion displaying a dialogue for starting a content purchase procedure.
[Fig. 5] Fig. 5 is a view of a display example of a detailed information display screen acquired from a content reproduction authentication server.
[Fig. 6] Fig. 6 is a view of a display example of an authentication screen acquired from the content reproduction authentication server.
[Fig. 7] Fig. 7 is a view of a display example of a screen during authentication acquired from the content reproduction authentication server.
[Fig. 8] Fig. 8 is a view of a display example of a purchase confirmation screen acquired from the content reproduction authentication server.
[Fig. 9] Fig. 9 is a view of a display example of an authentication failure screen acquired from the content reproduction authentication server.
[Fig. 10] Fig. 10 is a view of a display example of a purchase completion screen acquired from the content reproduction authentication server.
[Fig. 11] Fig. 11 is a view of a display example of a regenerated content list.

### EXPLANATIONS OF REFERENCE NUMERALS

10...content reproducing device; 11...contend list generating portion; 12...content reproducing portion; 13...storage medium; 14...controlling portion; 20...input portion; 30...displaying portion; 40...network interface; 50...content reproduction authentication server; 60...network; 101 to 106...title; 111...purchase state icon; 112...thumbnail; 113...cursor; 120...title display frame; 121...purchase state display frame; 130...dialogue; 131..."YES"; 132..."NO"; 141...title name; 142...price; 143...thumbnail; 144...summary information; 145..."purchase"; 146..."cancel"; 147...progress information display area; 148..."detail"; 151...customer number input field; 152...personal identification number input field; 153..."authentication"; 154..."authentication"; 161...information indicative of authentication in progress ; 171...title name; 172...price; 173...thumbnail; 174...user information; 175..."confirm"; 176..."cancel"; 177..."purchase confirmation"; 181...information indicative of failure of authentication; 191...information indicative of purchase completion; 192..."confirm"; and 193..."purchase completion".

### PREFERRED EMBODIMENTS OF THE INVENTION

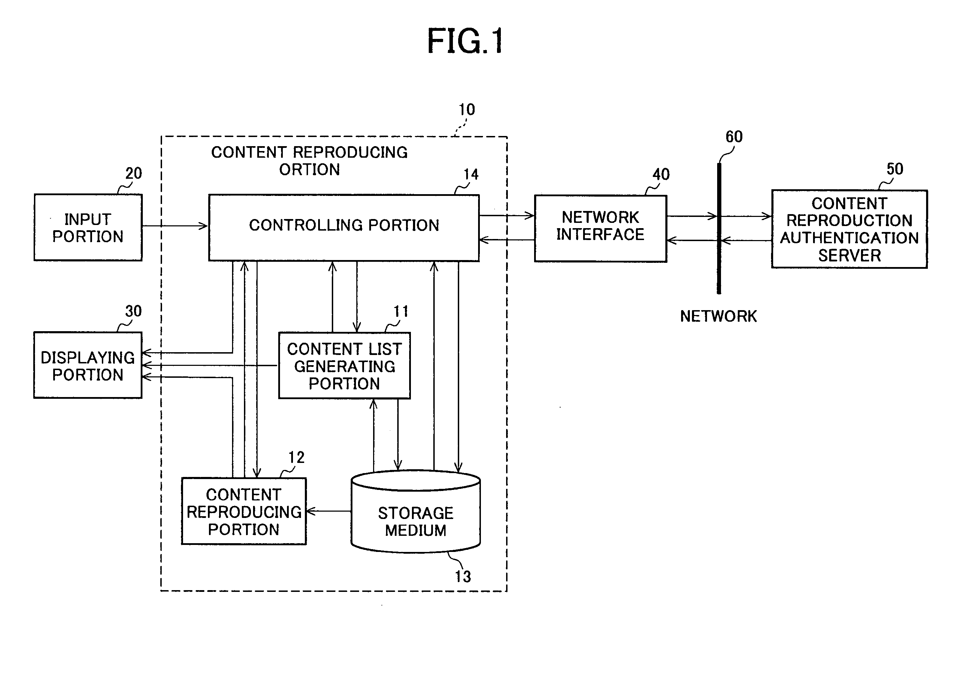

Fig. 1 is a block diagram for explaining a first embodiment of the present invention and shows that a content reproducing device 10 is connected to an input portion 20 and a displaying portion 30 and that the content reproducing device 10 is connected to the content reproduction authentication server 50 through a network interface 40 and a network 60. The displaying portion 30 corresponds to a displaying apparatus of the present invention and a displaying apparatus such as LCD connected to the content reproducing device 10 is applicable. Alternatively, the content reproducing device 10 may include the displaying portion 30.

The content reproducing device 10 includes a content list generating portion 11, a content reproducing portion 12, and a storage medium 13, and a controlling portion 14.
The storage medium 13 may be a storage device built into the apparatus or may be a removable medium. Magnetic discs (such as hard disc and iVDR), optical discs (such as DVD and Blu-ray Disc), etc., may also be applicable to the storage medium 13 without regard to the types thereof.
The storage medium 13 may have a plurality of contents recorded thereon and may have a mixture of purchased contents, unpurchased contents, and free contents reproducible without purchase recorded thereon.

The input portion 20 is configured such that a remote control code signal may be input from a remote control device, for example. When a request from a user is received through a certain remote control code, etc., via the input portion 20, the controlling portion 14 instructs the content list generating portion 11 to generate a list of contents.

The content list generating portion 11 generates a list of contents stored in the storage medium 13 in response to the list generation instruction from the controlling portion 14. The content list generating portion 11 generates a list with purchased contents, unpurchased contents, and free contents mixed. The generated list may be displayed on the displaying portion 30.

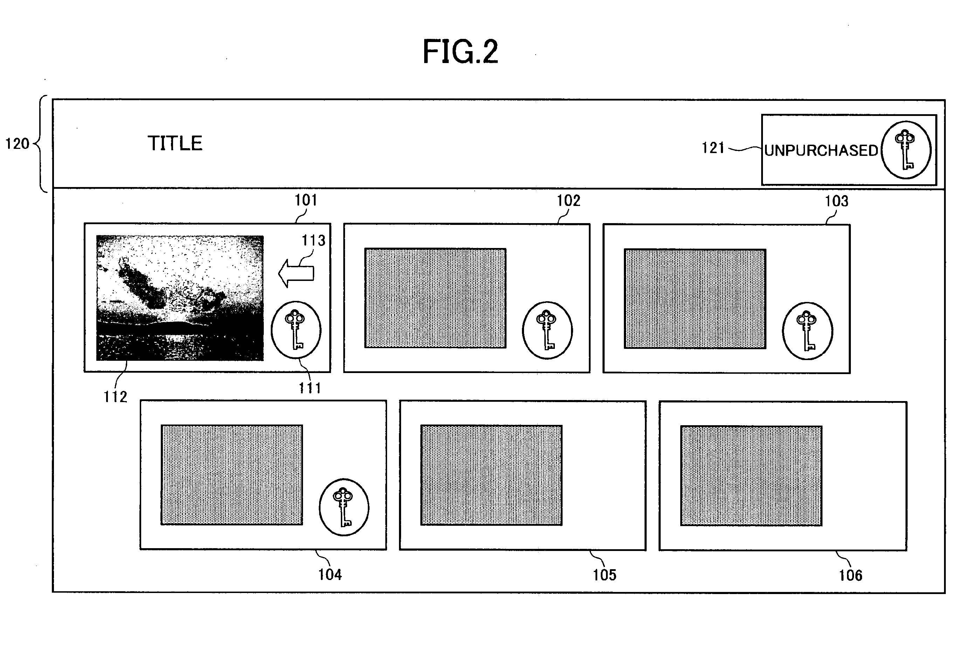

Fig. 2 is a view of a display example of a content list generated by the content reproducing device according to the present invention. In the example of Fig. 2, six content titles 101 to 106 are displayed in a display screen of the content list.
A purchase state icon 111 indicative of each content purchase state and a thumbnail 112 are displayed for each of the content titles 101 to 106, and a cursor 113 is also displayed that is movable within the display screen in accordance with user's operation. The thumbnails 112 in the titles display images related to the content titles.

A title display frame 120 is set on the upper side of screen for displaying a title of the content selected by the cursor 113. A purchase state display frame 121 is set in the right edge region of the title display frame 120 for displaying a purchase state of the selected content.

The title 101 is selected by the cursor 113 in the example of Fig. 2. The purchase state icon 111 of the title 101 indicates that the content is unpurchased.
Therefore, the title display frame 120 of the display screen displays a title name of the selected title 101, and the purchase state display frame 121 indicates that the content of the title 101 is unpurchased.

A user may use a remote controller, etc., to select a content desired to be reproduced from the content list in the state of Fig. 2. In this case, the controlling portion 14 of the content reproducing device 10 determines whether the selected content is a purchased content, an unpurchased content, or a free content.

If the selected content is a purchased content or a free content, the controlling portion 14 notifies the content reproducing portion 12 of information of the selected content. The content reproducing portion 12 reads out the selected content from the storage medium 13 and executes a decode process to display the content on the displaying portion 30.

If the user selects a title of an unpurchased content, the content reproducing device 10 may access the content reproduction authentication server 50 to execute a purchase process for the content. An example of process at the time of selecting unpurchased contents will hereinafter be described specifically with reference to a flowchart and an exemplary display screen.

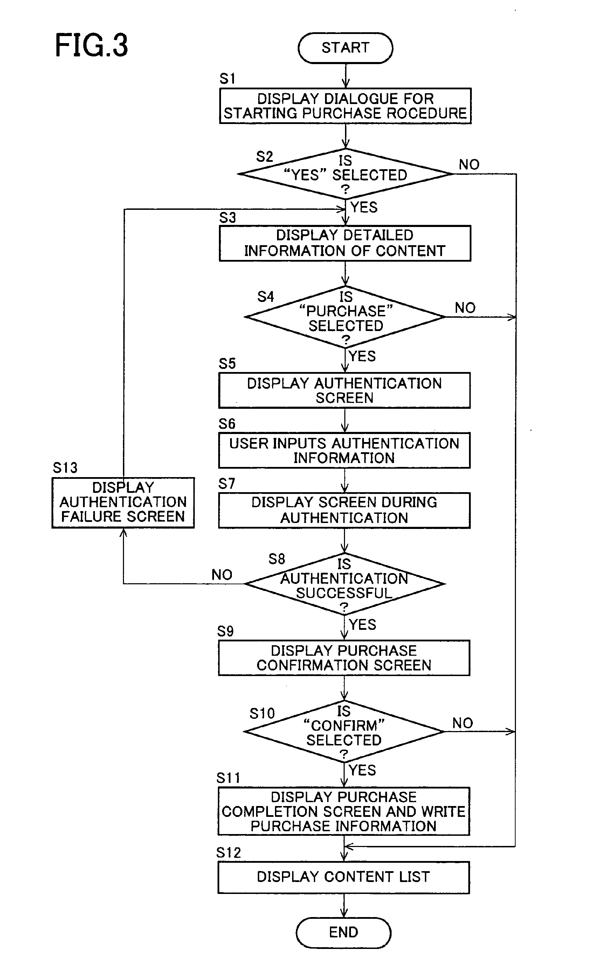

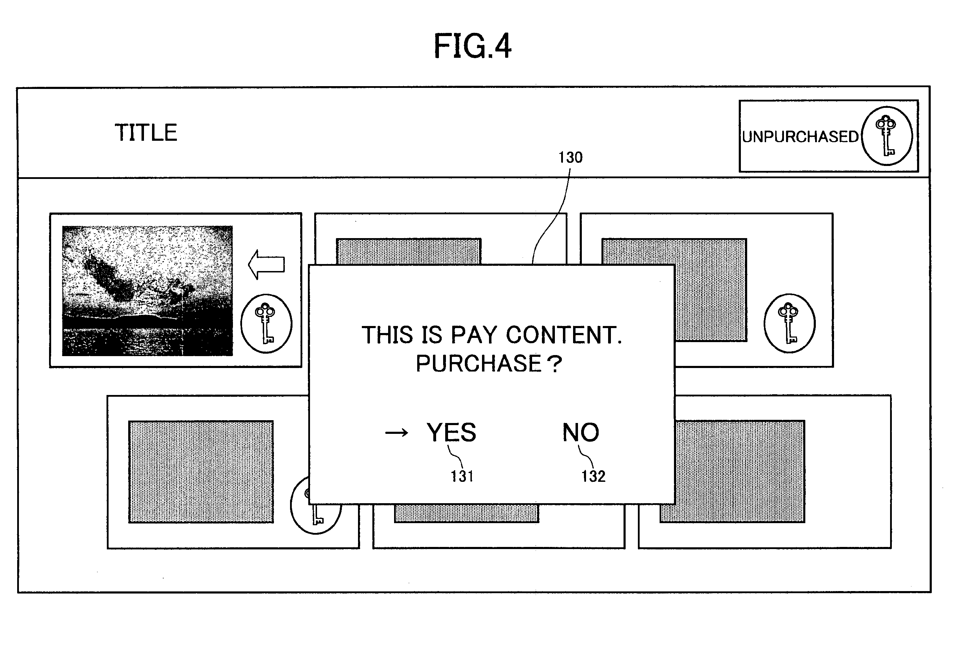

Fig. 3 is a flowchart for explaining an example of the purchase process of unpurchased contents related to the present invention.
If an unpurchased content title is selected through user' s operation from the content list as shown in Fig. 2, the controlling portion 14 of the content reproducing device 10 displays a dialogue 130 for starting a content purchase procedure on the displaying portion 30 as shown in Fig. 4 (step S1).

A user may select "YES" 131 or "NO" 132 through the cursor operation on this screen. The "YES" 131 may be selected to proceed to the content purchase process.
If the user selects the "YES" 131 (step S2, YES), the controlling portion 14 acquires a detailed information display screen including detailed information of the content and options for continuing or canceling the purchase procedure from the content reproduction authentication server 50 through the network interface 40 and the network 60 to display the screen on the displaying portion 30 (step S3). If the user selects the "NO" 132 (step S2, NO), the display returns to the title list (step S12).

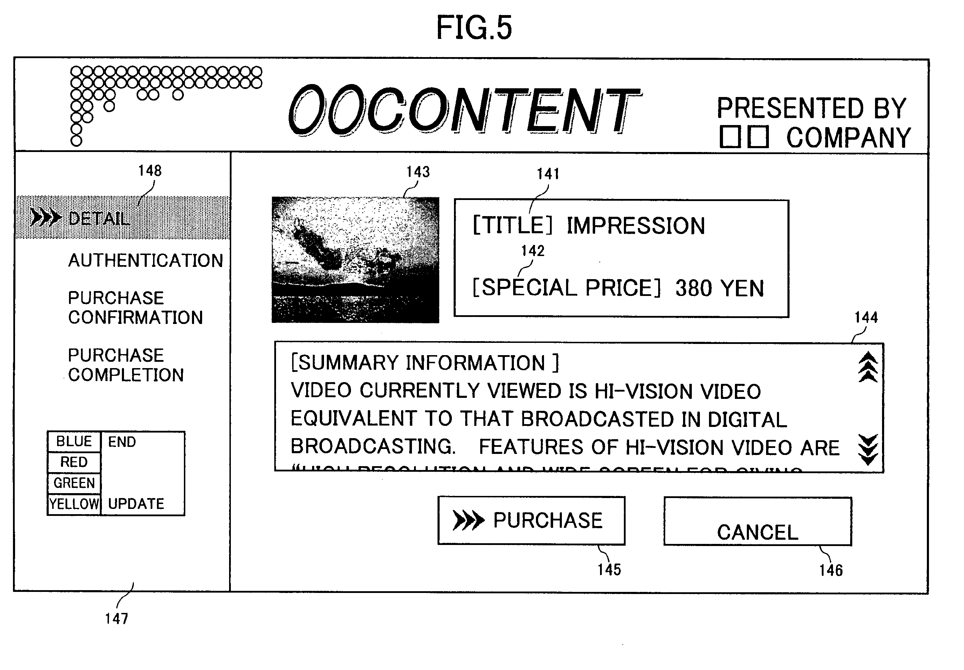

Fig. 5 is a view of a display example of a detailed information display screen acquired from the content reproduction authentication server 50.
The detailed information display screen displays a content title name 141, a content price 142, a thumbnail 143 displaying an image related to the content, and a content summary information 144 as the content detailed information. The screen also displays "PURCHASE" 145 for continuing the content purchase procedure and "CANCEL" 146 for cancelling the procedure.

A progress information display area 147 is set on the detailed information display screen of Fig. 5 to display progress information of the content purchase procedure. In the case of the detailed information display screen, the progress information display area 147 clearly specifies a progress stage of "DETAIL" 148.

If a user selects the "PURCHASE" 145 on the screen of Fig. 5 (step S4, YES), the controlling portion 14 acquires an authentication screen including an area for entering user information and password information and an area for executing authentication from the content reproduction authentication server 50 through the network interface 40 and the network 60 to display the screen on the displaying portion 30 (step S5). If the user selects the "CANCEL" 146 (step S4, NO), the display returns to the title list (step S12).

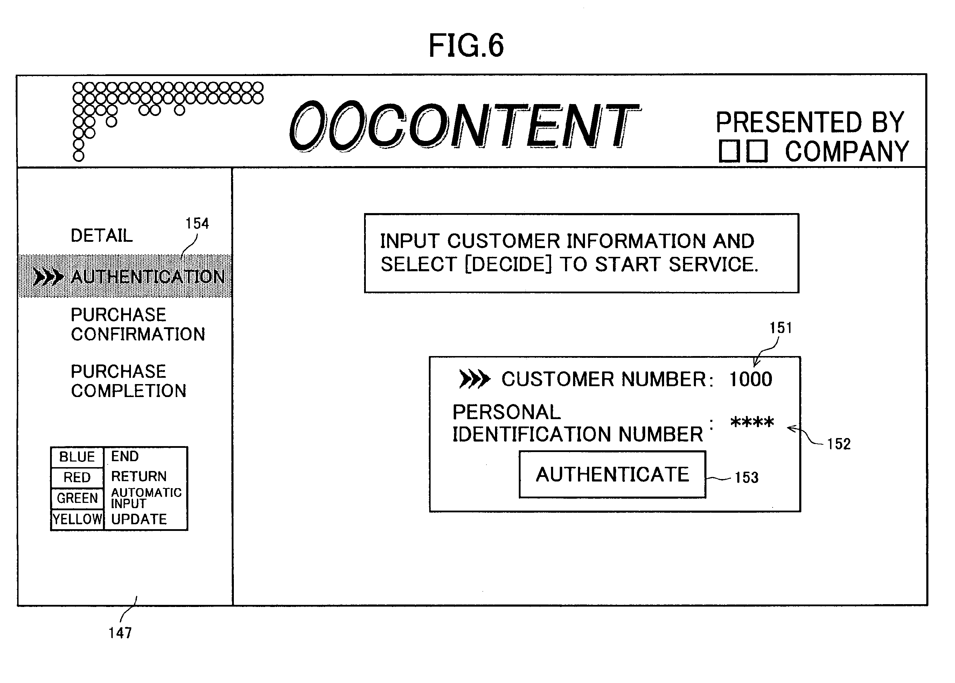

Fig. 6 is a view of a display example of the authentication screen acquired from the content reproduction authentication server.
The authentication screen is disposed with an input field 151 for the "customer number" that is user information and an input field 152 of "personal identification number". The authentication screen is also disposed with the progress information display area 147 for displaying the progress information of the content purchase procedure as is the case with the detailed information display screen of Fig.5 to clearly specify a progress stage of "AUTHENTICATION" 154.

If the user enters these pieces of authentication information with the use of, for example, numeric keys of a remote controller to select "AUTHENTICATION" 153 (step S6), the controlling portion 14 of the content reproducing device 10 transmits the input user information and personal identification number information to the content reproduction authentication server 50 through the network interface 40 and the network 60 and acquires a screen during authentication from the content reproduction authentication server 50 to display the screen on the displaying portion 30 (step S7).

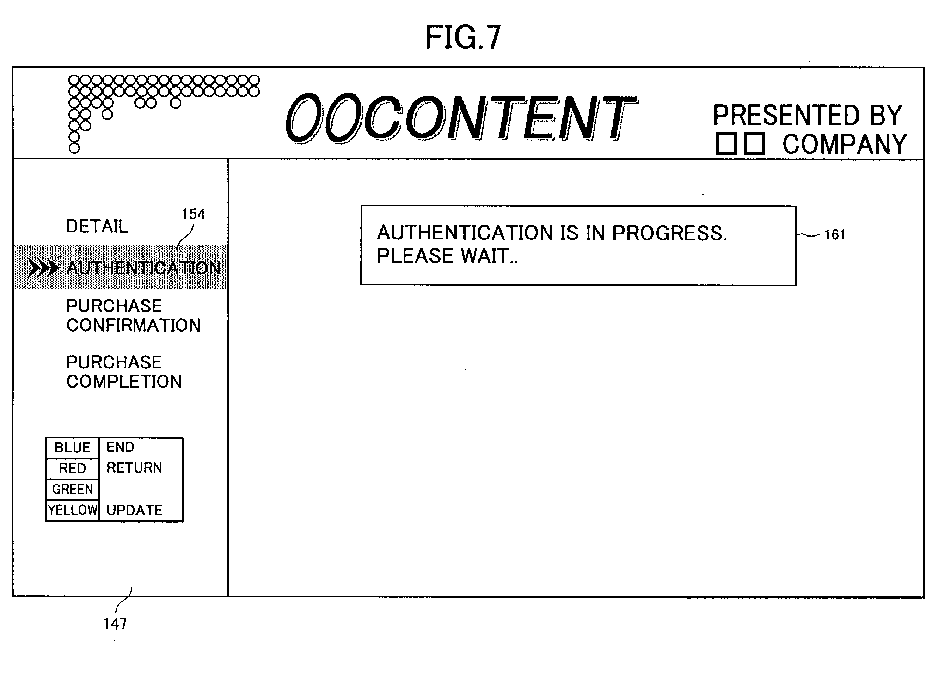

Fig. 7 is a view of a display example of the screen during authentication acquired from the content reproduction authentication server. The screen during authentication displays information 161 indicative of authentication in progress such as "AUTHENTICATION IS IN PROGRESS. PLEASE WAIT", for example. The screen during authentication is also disposed with the progress information display area 147 for displaying the progress information of the content purchase procedure as is the case with the detailed information display screen and the authentication screen to clearly specify a progress stage of the "AUTHENTICATION" 154.

The content reproduction authentication server 50 determines whether the authentication information is correct with regard to the user information and the personal identification number information transmitted from the content reproducing device 10. If the authentication is successful (step S8, YES), the controlling portion 14 of the content reproducing device 10 acquires a purchase confirmation screen from the content reproduction authentication server 50 through the network interface 40 and the network 60 to display the screen on the displaying portion 30 (step S9).

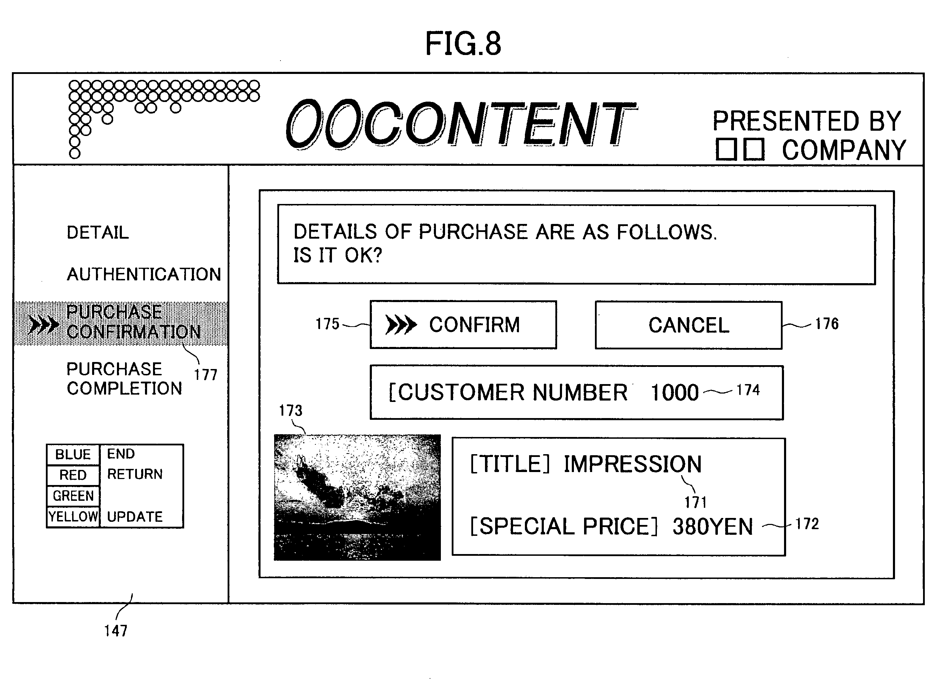

Fig. 8 is a view of a display example of the purchase confirmation screen acquired from the content reproduction authentication server. The purchase confirmation screen displays a content title name 171, a price 172, a thumbnail 173, and user information 174 and also displays "CONFIRM" 175 for the final decision of the purchase procedure and "CANCEL" 176 for canceling the purchase procedure. The purchase confirmation screen is also disposed with the progress information display area 147 for displaying the progress information of the content purchase procedure to clearly specify a progress stage of "PURCHASE CONFIRMATION" 177 in this case.

If the authentication fails in the content reproduction authentication server 50, the controlling portion 14 of the content reproducing device 10 acquires an authentication failure screen from the content reproduction authentication server 50 through the network interface 40 and the network 60 to display the screen on the displaying portion 30 (step S13).

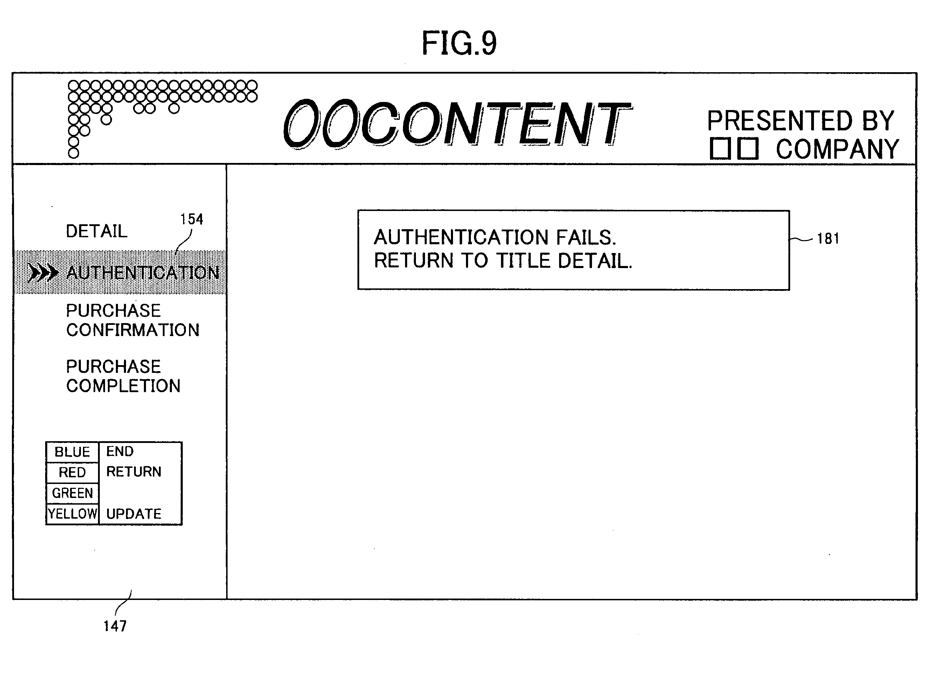

Fig. 9 is a view of a display example of the authentication failure screen acquired from the content reproduction authentication server. The authentication failure screen displays information 181 indicative of failure of authentication such as "AUTHENTICATION FAILS. BACK TO TITLE DETAIL", for example. The authentication failure screen is also disposed with the progress information display area 147 for displaying the progress information of the content purchase procedure to clearly specify a progress stage of "AUTHENTICATION" 154 in this case.
User's input operations are not allowed on the authentication failure screen and the authentication failure screen is displayed for a certain time period and automatically changed to the detailed information display (step S3).

If the user selects the "CONFIRM" 175 on the purchase confirmation screen of Fig. 8 (step S10, YES), the controlling portion 14 of the content reproducing device 10 accesses the content reproduction authentication server 50 through the network interface 40 and the network 60 to execute the purchase of the content and to record the purchase information in a purchase information storage area in the storage medium 13 and acquires a purchase completion screen for the user entering the confirmation of the purchase to display the screen on the displaying portion 30 (step S11). If the user selects the "CANCEL" 176 on the purchase confirmation screen of Fig. 8 (step S10, NO), the purchase of the content is canceled and the display returns to the content list (step S12).

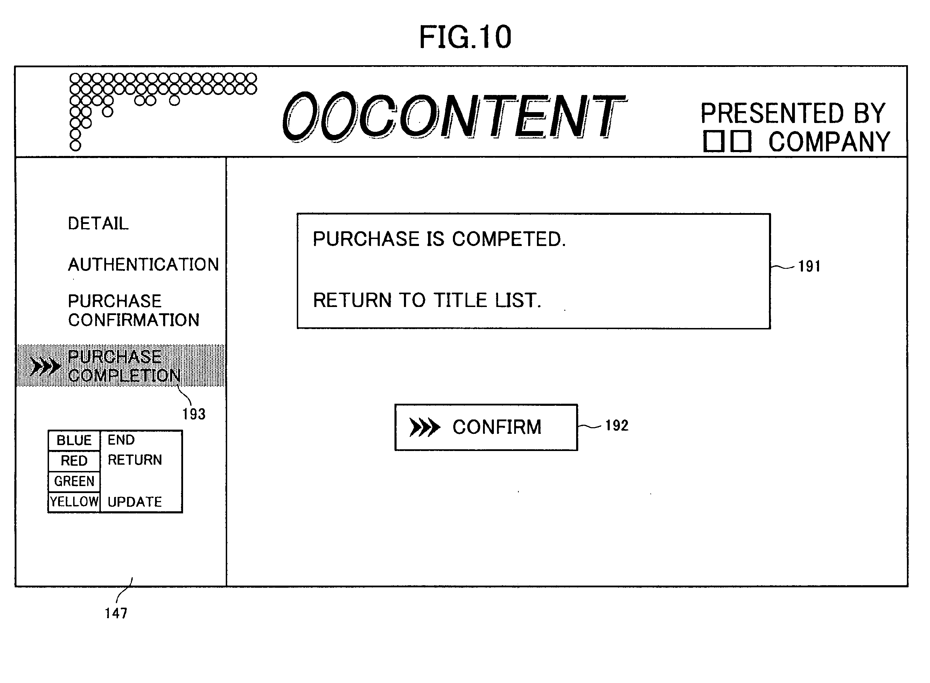

Fig. 10 is a view of a display example of a purchase completion screen acquired from the content reproduction authentication server. The purchase completion screen displays information 191 indicative of completion of purchase such as "PURCHASE COMPLETED, BACK TO TITLE LIST" and "CONFIRM" 192 for confirming the completion of purchase. The purchase completion screen is also disposed with the progress information display area 147 for displaying the progress information of the content purchase procedure to clearly specify a progress stage of "PURCHASE COMPLETION" 193 in this case.
If the user selects the "CONFIRM" 192 on the purchase completion screen, the controlling portion 14 of the content reproducing device 10 instructs the content list generating portion 11 to regenerate a content list. The content list generating portion 11 regenerates and displays a content list in accordance with the instruction (step S12).

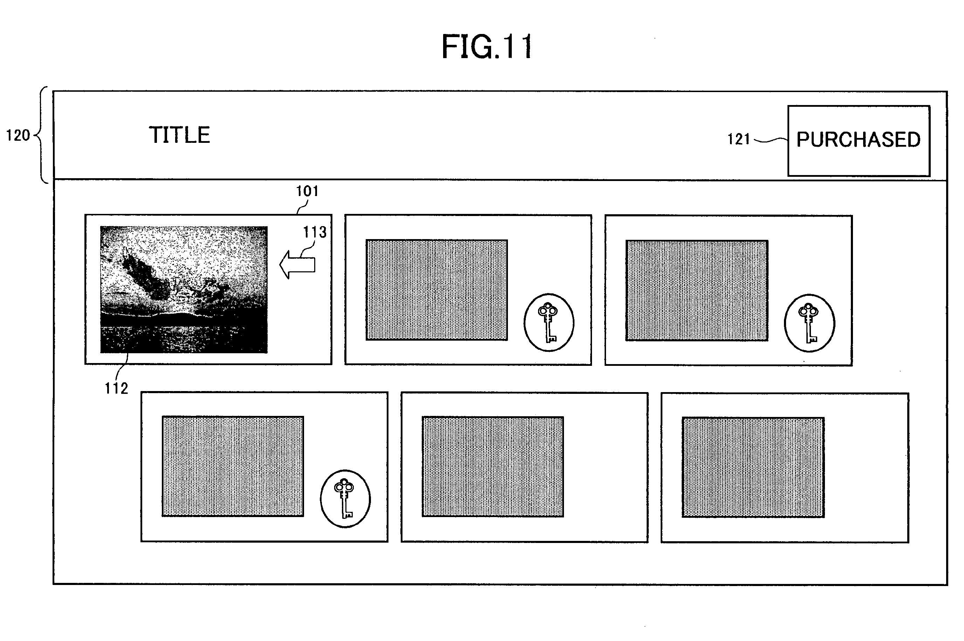

Fig. 11 is a view of a display example of the regenerated content list. The content selected from the content list displayed in the state of Fig. 2 is turned to a purchased content by writing the purchase information through the above process. Therefore, the purchase state icon 111 of the selected title 101 is not displayed on the display screen of Fig. 11 and the purchase state display frame 121 indicates that the content of the selected title 101 is "purchased".

If the user selects the title 101 again on the screen shown in Fig. 11, since the title 101 is a purchased content, the controlling portion 14 of the content reproducing device 10 notifies the content reproducing portion 12 of information of the selected content, and the content reproducing portion 12 may read out the selected content from the storage medium 13 and executes the decode process to display the content on the displaying portion 30.

After an unpurchased content is selected from the content list, a user may perform operations on the sequentially displayed screens as above to purchase the license of the contents and turns the content to a reproducible purchased content.
Although the progress information display area 147 of the above examples is displayed in the same display area on each screen, the progress status of the purchase procedure may also be displayed after a user makes a selection until the next screen is acquired and displayed.
The order of switching and the design of the screens of this embodiment are shown by way of example. Any orders and designs are available as long as a displayed screen includes details of a content to be purchased and an authentication information input area.

## Claims

1. A content purchasing/viewing system comprising a content reproducing device that stores and reproduces contents and a content reproduction authentication server that performs authentication for enabling viewing of contents stored in the content reproducing device,
wherein the content reproducing device includes a storage medium having stored thereon contents including a purchased viewable content and an unpurchased unviewable content; a content list generating portion that generates a content list of the storage medium; and a controlling portion that causes a displaying device to display the content list generated by the content list generating portion, wherein the content list displays a list of contents regardless of purchase states.

2. The content purchasing/viewing system as defined in claim 1, wherein the content reproducing device displays information indicative of whether each content displayed on the content list is purchased.

3. The content purchasing/viewing system as defined in claim 1, wherein the content reproducing device is capable of selecting a content from the content list and exhibits different behaviors depending on whether the selected content is purchased or unpurchased when the content is selected.

4. The content purchasing/viewing system as defined in claim 3, wherein when an unpurchased content is selected from the contents displayed on the content list, the content reproducing device displays on the displaying device a dialogue inquiring whether a purchase procedure is executed for the selected content.

5. The content purchasing/viewing system as defined in claim 3, wherein when a purchased content is selected from the contents displayed on the content list, the content reproducing device reproduces the selected content.

6. A content reproducing device that stores and reproduces contents, the content reproducing device comprising a storage medium having stored thereon contents including a purchased viewable content and an unpurchased unviewable content; a content list generating portion that generates a content list of the storage medium; and a controlling portion that causes a displaying device to display the content list generated by the content list generating portion, wherein the content list displays a list of contents regardless of purchase states.

7. The content reproducing device as defined in claim 6,
wherein the content reproducing device displays information indicative of whether each content displayed on the content list is purchased.

8. The content reproducing device as defined in claim 6,
wherein the content reproducing device is capable of selecting a content from the content list and exhibits different behaviors depending on whether the selected content is purchased or unpurchased when the content is selected.

9. The content reproducing device as defined in claim 8,
wherein when an unpurchased content is selected from the contents displayed on the content list, the content reproducing device displays on the displaying device a dialogue inquiring whether a purchase procedure is executed for the selected content.

10. The content reproducing device as defined in claim 8,
wherein when a purchased content is selected from the contents displayed on the content list, the content reproducing device reproduces the selected content.

11. The content reproducing device as defined in claim 9,
wherein when an input is made through the dialogue to indicate that a purchase procedure is executed, the content reproducing device accesses through a network to a content reproduction authentication sever that performs authentication for purchasing and making a content stored in the content reproducing device viewable and acquires detailed information of the selected content to display the detailed information as a detailed information display screen on the displaying device.

12. The content reproducing device as defined in claim 11,
wherein when an input is made from the detailed information display screen to indicate that the purchase procedure is continued, the content reproducing device accesses through a network to the content reproduction authentication sever and acquires authentication screen information for identifying a purchaser to display the authentication screen information as an authentication screen on the displaying device.

13. The content reproducing device as defined in claim 12,
wherein the authentication screen includes an area of inputting user information and password information as authentication information and a display area enabling instruction of executing authentication and wherein the user information and the password information are input through numeric keys.

14. The content reproducing device as defined in claim 12,
wherein when authentication is executed from the authentication screen, the content reproducing device accesses through a network to the content reproduction authentication sever to execute authentication and acquires a screen during authentication to display the screen during authentication on the displaying device.

15. The content reproducing device as defined in claim 13,
wherein when authentication is executed from the authentication screen, the content reproducing device transmits the user information and the password information to the content reproduction authentication sever.

16. The content reproducing device as defined in claim 14,
wherein when authentication is executed from the authentication screen and the content reproduction authentication sever fails in the authentication, the content reproducing device automatically acquires an authentication failure screen from the content reproduction authentication sever to display the authentication failure screen on the displaying device.

17. The content reproducing device as defined in claim 16,
wherein the authentication failure screen is displayed for a certain time period and is then automatically switched to display the detailed information display screen.

18. The content reproducing device as defined in claim 14,
wherein when authentication is executed from the authentication screen and the content reproduction authentication sever succeeds in the authentication, the content reproducing device automatically acquires a purchase confirmation screen from the content reproduction authentication sever to display the purchase confirmation screen on the displaying device.

19. The content reproducing device as defined in claim 18,
wherein when an input is made from the purchase confirmation screen to indicate that the purchase procedure is finalized, the content reproducing device accesses through a network to the content reproduction authentication sever to execute a content purchase process and acquires purchase completion screen information from the content reproduction authentication sever to display the purchase completion screen information as a purchase completion screen on the displaying device.

20. The content reproducing device as defined in claim 18,
wherein when an input is made from the purchase confirmation screen to indicate that the purchase procedure is finalized, the content reproducing device accesses through a network to the content reproduction authentication sever to execute a content purchase process and records purchase information into a purchase information storage area of the storage medium.

21. The content reproducing device as defined in claim 19,
wherein when an input is made from the purchase completion screen to indicate that the purchase completion screen is confirmed, the content reproducing device displays the content list on the displaying device.

22. The content reproducing device as defined in claim 21,
wherein the content reproducing device displays information indicative of whether each content displayed on the content list is purchased and wherein when the purchase completion screen is switched to display the content list, the information indicative of whether purchased or not is immediately reflected in the purchase result.

23. A content reproduction authentication server that performs authentication for enabling viewing of contents stored in a content reproducing device storing and reproducing the contents, wherein
when the content reproducing device selects an unpurchased content from the stored contents and accesses through a network to the content reproduction authentication sever, the content reproduction authentication sever transmits detailed information of the selected content as a detailed information display screen to the content reproducing device.

24. The content reproduction authentication server as defined in claim 23, wherein the detailed information display screen includes a progress information display area that displays progress information of a purchase procedure.

25. The content reproduction authentication server as defined in claim 23, wherein the detailed information includes a title name, a price, a thumbnail, and a brief description of the content.

26. The content reproduction authentication server as defined in claim 23, wherein the detailed information display screen includes a display area enabling selection of whether a content purchase procedure is continued or canceled.

27. The content reproduction authentication server as defined in claim 23, wherein when the content reproducing device makes an input from the detailed information display screen to indicate that the purchase procedure is continued and accesses through a network to the content reproduction authentication sever, the content reproduction authentication server transmits authentication screen information for identifying a purchaser to the content reproducing device.
